# EUROPEAN PATENT APPLICATION

(11) **EP 1 641 301 A1**
(43) Date of publication of application: **29.03.2006**
(21) Application number: 04022806.6
(22) Date of filing: 24.09.2004
(51) Int. Cl.: H04Q 7/38, H04L 12/28, H04L 12/56

(54) **Method and device for transmitting translocation messages**

(71) Applicant: SIEMENS AKTIENGESELLSCHAFT, 80333 München (DE)
(72) Inventor: Hermann, Sven, 31141 Hildesheim (DE); Lipka, Michael, 80687 München (DE); Schäfer, Günter, Dr., 10551 Berlin (DE)

(57) **Abstract**

The invention allows an efficient handling of trigger messages by a 1. Method for transmitting a trigger message (Fig. 7: "1.leave"; "2. enter") indicating at least one translocation (Fig. 7: 12->9, 9->10) of a participant of a cellular mobile network,
characterized in that an intermediate transmitting device (Fig. 7: packet router 2.2) for forwarding trigger messages receives at least one trigger message ("1. leave") concerning this translocation from at least one first transmitting device (R3.2),
and that the intermediate transmitting device (R2.2) decides on whether to send at least one trigger message concerning the translocation to at least one further transmitting device (packet router R1.1), wherein the intermediate transmitting device (R2.2) decides on the basis of stored service position data representing a coverage area of at least one service, wherein in case of a decision of the intermediate transmitting device (R2.2) to send a trigger message, the intermediate transmitting device (R2.2) transmits at least one trigger message.

## Description

The invention concerns methods and devices for transmitting trigger messages in a mobile network and activation of such methods for transmitting of trigger messages.

Mobile networks, especially cellular mobile telecommunication networks are known to one skilled in the art, e.g. from GSM (www.its.org) or third generation networks (see for example www.3ggp.com). In such telecommunication networks trigger mechanisms can send trigger messages if they detect certain events, wherein devices receiving such trigger messages can start predetermined actions, for example predetermined services for participants in a predetermined coverage area of a service.

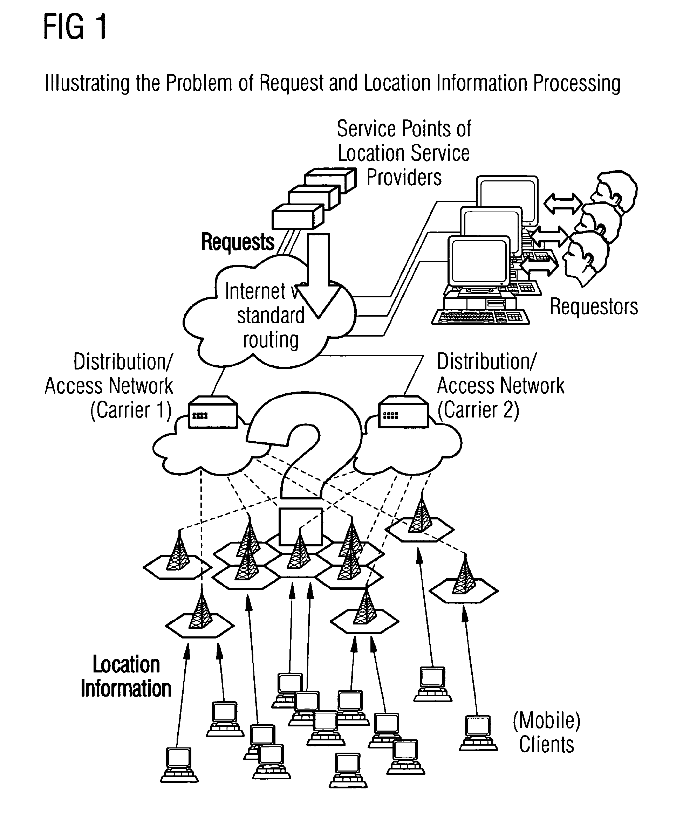

As Figure 1 shows service providers offer customers the possibility to set up services in a special selectable geographical area or to send information to it. By this way, mobile (wireless) users can be provided with useful services and information which is related to their current position, e.g. special offers can be advertised to users who are located in the area of a shop.

A basic functionality of such services is a mechanism which enables the detection of mobile devices having a defined spatial relation to a requested area and which sends appropriate notifications to a service provider who mediates between the customers and the carrier of access networks.

These notifications are called area based triggers (ABTs). They contain a client's ID and optional parameters like its exact position, information about the device and user, and a timestamp. For instance, an ABT can be triggered if a mobile client enters or leaves a requested area. The trigger would then be send to the service provider who processes it according to the requested kind of service, e.g. he informs the customer that the node with the ID left/entered the area.

The solutions to provide area based triggers are centralistic approaches. A central entity in a network collects the location information from all mobile clients in the network. Additionally, the information about every requested area with the specified trigger criteria is available to it. The task of the entity is the comparison of the client's whereabouts with the borders of the areas and the emission of a trigger, if a change of location matches (at least) one request.

Figure 1 illustrates a known mechanism. It needs the whereabouts of all mobile clients in the network, which must be periodically updated, leading towards a steadily huge amount of exchanged signaling messages.

The provisioning of area based triggers requires the participation of different units in the network, each of them having its own role and tasks. The area based triggers will be offered by *location service providers (LSPs).* Several different providers will exist. They create an appropriate infrastructure, i.e. they distribute *service points (SP)* in the Internet. The person or application which wants to initiate an area based trigger is called *requestor,* who issues the service request to a SP. The geographical target area for a service is individually selected by the requestor.

After the processing of the request, the SP contacts one or more carriers (e.g. Vodafone, 02, WLAN provider). It is chosen depending on the specific area and the coverage of the single carrier's access technology. Afterwards, a setup message which requests the area based trigger is send to the operative subsystems in the network of the carrier(s). Due to the fact that an area may be covered by heterogeneous technologies, the processing of triggers must be independent from them.

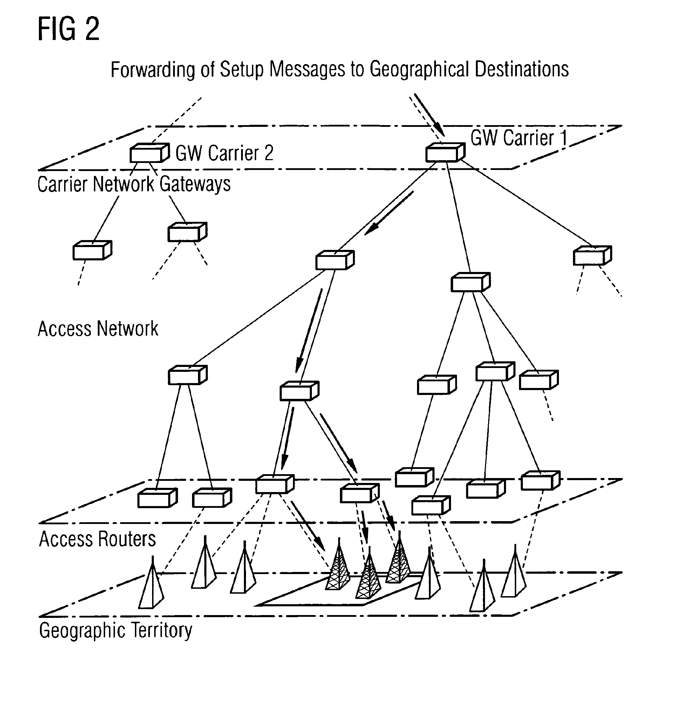

Actually, the processing of trigger event and setup messages is performed in the access *networks* (AN) of the carriers. An architecture as shown in Figure 2 presents a simple AN, which is connected via a *gateway* (GW) with the internet. Area requests are routed through the network to the access routers and processed by the network entities. The *access routers* in the distribution network cover a certain geographic territory. The GW and access routers are connected via several intermediate routers. The messages can be routed through the network to geographical destinations, e.g. via GeoCast [T. Imielinski, J. Navas, "GPS-Based Addressing and Routing", IETF Request for Comments 2009, rfc2009.txt, November 1996.].

In the GeoCast mechanism, the geographical destination coordinates (i.e. the coordinates of the area) are inserted in every message. It is assumed that every access router knows the coordinates of its coverage area and all relevant intermediate network systems know the coverage areas of the other systems which are connected to them. In this case each router performs a test if the geographical area which is covered by its connected access routers or the coverage areas of other routers which are connected to it comply with the target address and forward it to the appropriate system.

Furthermore, it can be assumed that a mobile client can be detected in a cell by the individually deployed access technology, at least if link layer signaling takes place between access routers and the clients.

Up to now, several efforts have been made to develop mechanisms which are able to compute triggers with mobile client's whereabouts and information about requested areas, but all of them are based on a centralistic approach.

An approach from Mobilaris
[http://www.mobilaris.com/download/
Mobilaris_LBS_Trigger_solution_Feb2004.pdf] offers customers who want to make use of location based services (LBS) the ability to specify trigger conditions in LBS applications. These conditions are submitted to a so-called LAT server and stored by it. The second component which is required for the trigger processing, the location information of mobile clients, is continuously delivered from the operators of access networks (carriers) in the form of traffic data to the server. Before being able to process the location information, the server has to translate the traffic data into geographical coordinates. This is achieved with appropriate information about the network, called site data. After having performed this additional processing step, the server is able to compare the location information with the requested areas and send notifications or perform other actions if a trigger condition is fulfilled. As already described, the computation of the trigger events requires the two information components being available in one central LAT Server. This results in inherent problems regarding the scalability of the approach. Another drawback is that the trigger processing as well as the mapping of traffic data to geographical coordinates has to be performed by the server.

Although not being especially designed for the processing of area based triggers, the IMPS (Instant messaging and presence services) approach of the Internet Engineering Task Force (IETF) [M. Day, S. Aggarwal, G. Mohr, and J. Vincent. RFC 2779: Instant Messaging/Presence Protocol Requirements, 2000 and M. Day, J. Rosenberg, and H. Sugano. RFC 2778: A Model for Presence and Instant Messaging, 2000] can also be utilized for it and therefore the approach should be mentioned here. The mechanism allows principals (i.e. users) to provide a so called presence service with their presence information via a presentity (i.e. user agent). The presence service accepts, stores and distributes this information which consist of one or more presence tuples with status, communication address and other related information. For the processing of area based triggers, these tuples have to contain the geographical coordinates. Now, another user can utilize a watcher (user agent) to request defined presence information via polling, fetching or subscribing. In this case, the watcher would correspond to an area requestor, and specify its request for presence information based on geographical attributes, i.e. the coordinates of an area. The drawback of the approach is that obviously the presence information of all users has to be available to one presence service, being realized with one server, for the complete processing of the area requests. In fact, the presence information of different principals can be distributed on several servers all over the network, but this requires inter-server communication and does not solve the scalability problems. Furthermore, the IETF approach requires that the principals can detect their geographical positions on their own and submit it to the presence service.

It is an object of the invention, to allow an efficient handling of trigger messages in a mobile telecommunication network. The object is achieved by the invention set forth in the claims.

The invention permits scalability regarding the number of mobile clients in a network (i.e. the location information), the number of requested areas and the size of the geographical coverage area of the network. A method according to the invention can derive all relevant information for the generation of area based triggers right from the movement of mobile clients in the cells of the access network. Advantageously, triggers are computable as close to the origin of location information as possible, which allows a reduction of the exchanged location signaling and a distributed processing of triggers.

The invention allows a hierarchical, efficient handling of trigger messages in a mobile telecommunication network, especially a cellular mobile telecommunication network or WLAN telecommunication network. The invention described in this application overcomes the drawbacks of centralistic processing by provisioning a hierarchical distributed processing mechanism for area based triggers.

The invention comprises a method for activation of such trigger handling methods in a switching device. Switching devices according to the claims can be any switching devices for packet switching or line switching, for example, mobile switching centers, SGSNs, GGSNs etc.

The claims and the following description of an embodiment of the invention explain further advantages of the invention. In the enclosed drawings:
Figure 1 shows the problems solved by the invention,
Figure 2 shows a telecommunication network,
Figure 3 shows a setup of two different area based triggers,
Figure 4 shows request segregation and trigger aggregation,
Figure 5 shows request aggregation and trigger segregation,
Figure 6 shows a setup of an area based trigger,
Figure 7 shows roaming of a mobile client and trigger aggregation,
Figure 8 shows an outline of a network, and
Figure 9 shows aggregation of an area request.

The invention described in this application provides a mechanism for the distributed and hierarchical processing of area based triggers. Therefore, area requests are split in the network into different area parts, depending on the underlying network topology. Basic trigger events are generated in the subareas due to the emerging movement of mobile clients and combined to more complex ones at each stage of the network, until they sum up to the original requested trigger. Each router stores the requests which are received by it and processes the trigger events according to the criteria. The requests remain stored until the lifetime of the area request exceeds or until it is explicitly revoked.

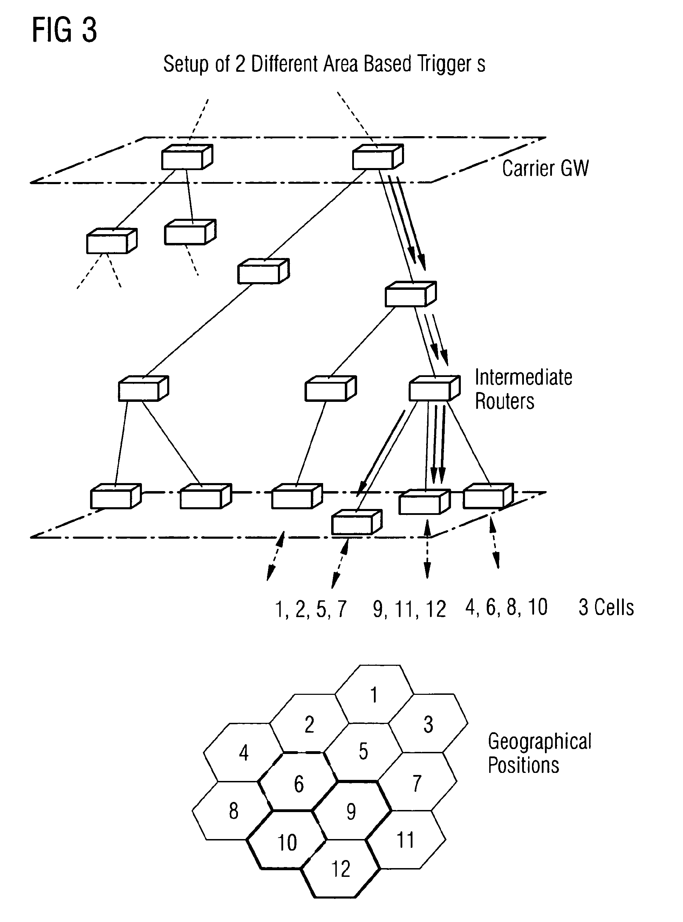

Assuming that the setup messages which requests areas with specified triggers are send by the service points of the location service providers to the access networks which cover the desired geographic territory and forwarded via a mechanism for routing to geographical addresses, e.g. GeoCast, the area might be covered by more than one router, requiring a segregation of the setup message during the forwarding process. Each intermediate router knows that for the processing of triggers, events from all downlink routers are needed to which the setup message is duplicated and forwarded. Before an intermediate router forwards a message, it performs a check if there has not been an ongoing request for triggers from the same area. If this is true, the request will not be forwarded, but the router will segregate trigger notifications and allocate it to both requests. The latter described mechanism works for identical requested areas as well as for areas which are identical regarding the coverage area of an intermediate router. If the forwarding of the setup message is not already stopped in an intermediate router because of an existing request, it will reach the access routers of the network. Figure 3 shows the setup of two different area based triggers in the access network.

The access routers perform a first step of area based trigger processing. Knowing the area or subarea requests, they can decide if after a location change of a mobile node a trigger must be emitted or not. Location information is directly converted into triggers and no longer required for the processing afterwards. Therefore, a first step of aggregation is performed at the access router level in the network because the ongoing signaling of the location information to a central server ceases.

The generated triggers are forwarded upwards through the network. Each router performs a check, if the trigger event is required for the processing of more than one request (i.e. the request was aggregated during the forwarding of the setup message) and/or if the trigger event is required for the composition of a more complex one (i.e. the setup message was split during the forwarding towards the access routers). The details of the composition of trigger events in case a mobile node leaves or enters a certain area are explained in the following section.

The proposed mechanism is suited for the next generation of services, which are related to specific areas (so called Area Based Services). It is a basic technology deployable in the network infrastructure to distribute the computation effort and storage consumption for the processing of area based triggers in access networks.

The following section presents a more detailed explanation of the mechanism of the invention:

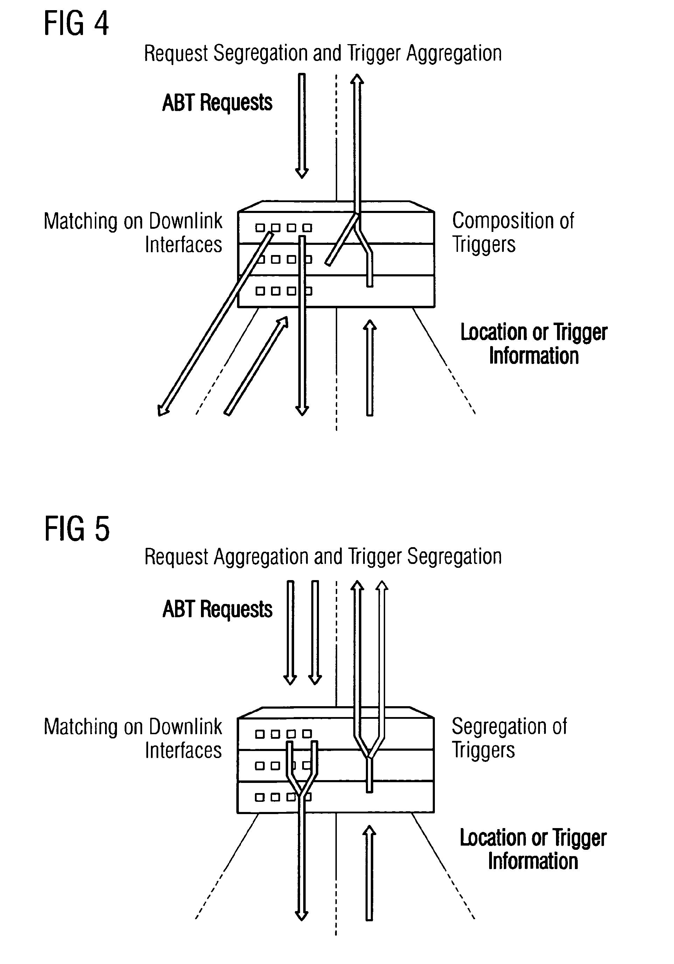

Figure 4 gives an overview of the hierarchical processing of area based triggers based on aggregation/segregation of both requests and trigger events. The explanations in detail:
1. A setup message which requests a certain area with a trigger is send to the gateway of the carrier's access network. The message contains the geographical coordinates of the area and the criteria for the trigger (e.g. enter, leave). Additionally, an ID for the trigger, IDₜᵣ, is required.
2. The message is send via a geographical routing mechanism to the access routers of the network, which cover the requested geographical territory. During the forwarding of the message, each router keeps a copy of the request and checks if an ongoing request for the identical area already exists. If this is true, the forwarding is aborted and the router knows that triggers with the IDₜᵣ of the former request will also match to the current one, the *requests are aggregated* in this case (see figure 5). Different lifetimes of the requests have to be considered. If one of the aggregated requests exceeds, a check is required if no other one is still active, before it can be completely revoked.
3. Before a message can be forwarded, it might be necessary that it is duplicated and send to more than one downlink interface of a router, because the area could be covered by several access routers which are located at different branches of the network topology. This is called *segregation* of *request messages.* In that case, the router knows that it has to combine trigger events, which will arrive from the downlink routers, each covering a subset of the requested area, to more complex or the final ones. Prior to the forwarding of a duplicate, the same check as in item number 2 is performed and if a former request which is identical regarding the subset exists, the forwarding is also aborted.
4. If no aggregation of the request could be performed in the intermediate routers, it finally reaches the access routers. These routers play a central role in the mapping of location information of mobile clients to trigger information. Each access router stores the area request and compares the current whereabouts of the clients with them. A trigger is only emitted, if the change of the mobile node's positions fulfills a requested criterion. In the simplest case, the granularity of the areas corresponds to the cells of the deployed access technology which are supplied by an access router. Under this assumption, the access router can decide if a mobile client left or entered an area by detecting the presence or absence of it when at least link layer communication is established between the cell and the client. For instance, if a leave trigger is established for an area, the access router does not have to send a trigger as long as the mobile client leaves a cell and reestablishes a new connection in another cell belonging to the area, but if a connection is reestablished with another one or if the client leaves the cells being supplied by this router.
5. When a trigger criterion is fulfilled (e.g. a participant (e.g. a mobile station and/or SIM module) enters a cell and/or leaves a cell), an appropriate event with IDₜᵣ and the ID of the mobile client which triggered it (ID_{mc}) is sent in upward direction through the network. At this point it should be noted that some service may not require the IDs of the clients, e.g. statistical services. The access routers can perform a first step of service processing by only transmitting information of e.g. the amount of clients which leave or enter an area.
6. During the forwarding of the triggers in upward direction, each router performs a check if the event must be assigned to different requests and independently be processed, which have formerly been aggregated in step 2. This is called *segregation of triggers.*
7. After step 6, the router checks if the forwarding of the trigger depends on other ones from downlink routers, which cover a different spatial part of the same requested area (see step 3). The following subitems show the required actions for the *aggregation of triggers.*
   a) The composition of an enter trigger requires the information, if the mobile client with ID_{mc} has left one of the other subareas shortly before. For instance, if an area is covered by two access routers (AR) and one of them sends the upper level router (UR) the information that a certain mobile node entered the subarea being covered by the AR, the UR has to check if the other AR has already announced that the mobile client left its subarea. In that case, the UR knows that the client did not enter the area because it has formerly already been in it and does not forward an enter trigger. Under certain circumstances, the trigger events of other lower level routers will arrive delayed, therefore the router which combines the triggers has to wait for a short time before it makes a decision.
   b) The other way round, the decision if a leave trigger must be forwarded by a router depends on enter triggers for the ID_{mc} from the routers which cover parts of the same area. If one enter trigger of any other involved router is received in addition to the leave trigger, the mobile client has not left the area and the upper level router does not forward the trigger.
8. The processing of the triggers ends when the trigger messages reaches the first system which started with the processing of the request message. For example, the first system may be the gateway of an access network, therefore the processing ends if the trigger is forwarded by the gateway to e.g. the internet.
9. The processing of the triggers requires that the routers store the requests for the aggregation of requests. Additionally, the composition of triggers is statefull and requires also some storage and computing power. Therefore, a suited mechanism will tear down the area requests as soon as their durations exceed (e.g. tear down messages, timers).

Especially the following properties can be achieved by the invention:
- The mechanism enables the distributed and hierarchical processing of area based triggers and scales for:
   o a large number of nodes,
   o a large number of areas, and also
   o a large size of the coverage area
- Complex triggers are derived by processing partial information at each stage of the network, contributing as much to the process as possible.
- Only the location information of mobile clients being in a territory with a requested area is transmitted, saving a huge amount of signaling messages required for centralistic approaches.
- No central database is required which stores information about the coverage area of single cells of the network or which is required to perform any kind of mapping of mobile node's location data to geographical coordinates.
- The periodical transportation of the mobile node's location information to a central entity in the network is not required, the access routers monitor the whereabouts and emit a trigger only if a criteria is fulfilled.
- The processing is independent from the underlying access network technology (e.g. UMTS, GSM, or WLAN)

In the access network, hierarchical and distributed processing of area based triggers based on aggregation/segregation of both requests and trigger events is proposed.

The invention develops novel methods
- to distribute the computation of area based triggers to different stages of the network
- to derive trigger events by the aggregation of partial events
- to reduce the signaling amount of location information in the network by performing a pre-computation in the access routers. The information is directly converted into (partial) trigger events. Furthermore, only if an area is actually requested, the information must be processed. With centralistic approaches, this spatial filtering is not possible
- to aggregate area requests and reuse the results of area based trigger computation for multiple requests, reducing the required computation, signaling and storage effort
- to process area based trigger, independently from the underlying access network technology

Summarizing, the invention represents an important step towards realizing scalable area based trigger processing.

The following shows two example usages of the invention. In the first one, the setup of an area based trigger and the aggregation of triggers is described based on the cut-out of an access network. The second one shows an example for the aggregation of requests and the segregation of triggers.

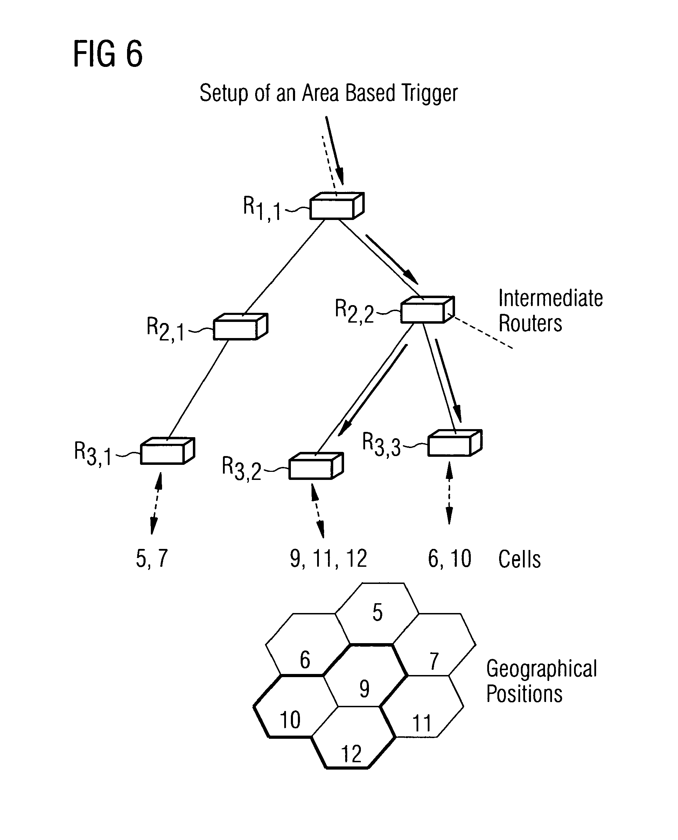

They are related to a section of the architecture of a sample access network of a certain carrier. The network is connected via a gateway to the Internet. Now, as example no. 1, a certain company wants to setup an ABT in the coverage area of the access routers, for instance, the area corresponds to a bus stop in front of a shop, and each mobile client which leaves the area should be notified about current advertisements. The geographical coordinates of the area are inserted in a setup message including the trigger criteria "leave" and forwarded through the network (see figure 6).

In this example, the requested area responds to the radio cells 9, 10 and 12 (assuming cell granularity for the areas in the examples), being covered by the access routers R_{3,2} and R_{3,3}. Firstly, the intermediate router R_{1,1} receives the area request message with the leave trigger criteria. The indicated area is mapped to the right downlink interface and forwarded, due to a geographical routing mechanism. When the intermediate router R_{2,2} receives the message, it maps the area to the two downlink routers R_{3,2} and R_{3,3}. R_{2,2} now knows that this leave ABT will depend on triggers from R_{3,2} and R_{3,3}. This knowledge has been directly obtained from the routing decision.

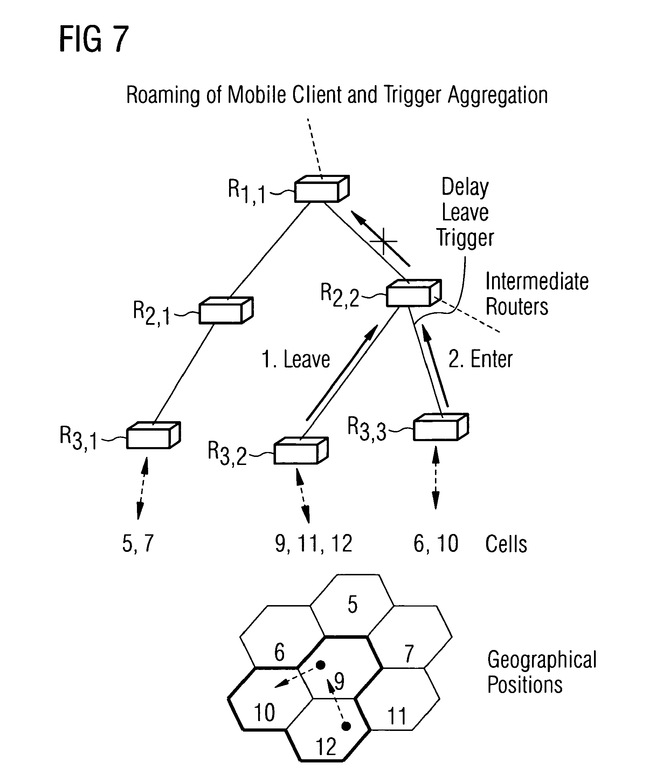

After R_{3,2} and R_{3,3} received the messages, they listen on the associated cells and issue triggers if they are fulfilled. With cell granularity, this means that the access routers perform a check only if a new association between a cell and a mobile client starts or if an existing one is aborted and if the cell is part of a requested area. With finer granularity, the location information of the mobile clients must be continuously monitored and compared with area borders. Figure 7 shows the roaming of a mobile client in the area and the aggregation of triggers.

Assuming that the mobile client is already in the area, in cell 12, when it changes from cell 12 and builds up an association with cell 9, the access router R_{3,2} recognizes that it is still in the area and sends no trigger. Afterwards, the client moves to cell 10. R_{3,2} detects the absence of the client. After waiting for a short time to ensure that the client does not enter cell 12 again and remains therefore in the area, R_{3,2} sends a leave trigger in upward direction to intermediate router R_{2,2}. Router R_{2,2} knows that it is not able to decide whether the node left the area based only on the trigger from R_{3,2} and checks if it receives or has already received a trigger from R_{3,3} which emits (nearly simultaneously) the enter event for the same node ID. Router R_{2,2} is now able to combine the events and in this case it has to emit no leave trigger because it knows that the client is still in the area, even though this part is covered by another access router.

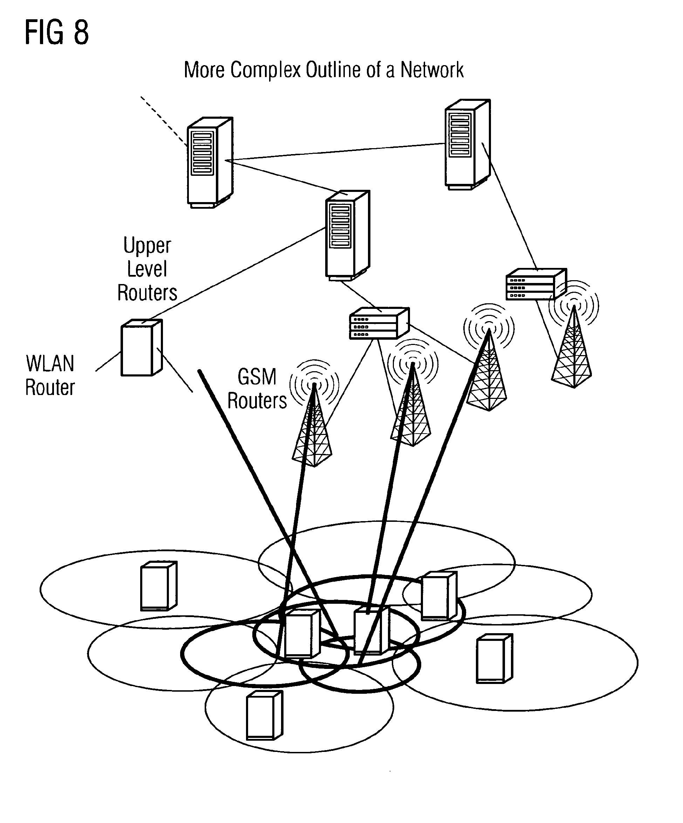

The cells being covered by the access routers in the figures of the example are very simplified because they neither overlap nor they have different shapes/sizes. Usually, this is not correct but has no influence on the invention. Additionally, we would like to point out that the routers can process information independently from the deployed access technology, e.g. R_{3,2} may cover a WLAN network and R_{3,3} a GSM network, but nevertheless R_{2,2} would be able to process the trigger information (see figure 8).

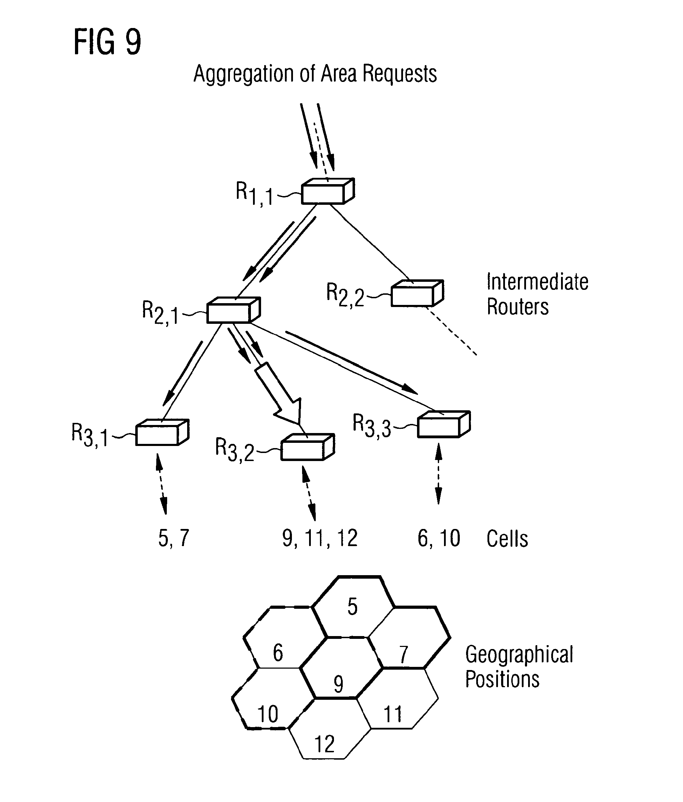

The following second example shows the aggregation of requests and the segregation of trigger events (see figure 9).

The example shows two area requests, one for the cells 6, 9 & 10 covered by the access routers R_{3,1} and R_{3,2} and another one for the cells 5, 7 & 9 covered by R_{3,2} and R_{3,3}. When the requests reach R_{2,1}, they are segregated due to the routing decision and forwarded to the appropriate routers. During that process, R_{2,1} detects that the areas are identical regarding the coverage area of R_{3,2} (exactly, regarding cell no. 9). Therefore, instead of forwarding the two requests to R_{3,2}, router R_{2,1} aggregates both to one single request and memorizes that a trigger from R_{3,2} matches two request and that it has to be segregated and processed accordingly.

## Claims

1. Method for transmitting a trigger message (Fig. 7: "1.leave"; "2. enter") indicating at least one translocation (Fig. 7: 12->9, 9->10) of a participant of a cellular mobile network,
- **characterized in that** an intermediate transmitting device (Fig. 7: packet router 2.2) for forwarding trigger messages receives at least one trigger message ("1. leave") concerning this translocation from at least one first transmitting device (R3.2),
- and that the intermediate transmitting device (R2.2) decides on whether to send at least one trigger message concerning the translocation to at least one further transmitting device (packet router R1.1), wherein the intermediate transmitting device (R2.2) decides on the basis of stored service position data representing a coverage area of at least one service,
- wherein in case of a decision of the intermediate transmitting device (R2.2) to send a trigger message, the intermediate transmitting device (R2.2) transmits at least one trigger message.

2. Method according to claim 1, wherein the intermediate transmitting device (2.2) receives respectively one trigger message from at least two first transmitting devices (R3.2, R3.3) regarding this translocation carried out by the participant of the telecommunication network, wherein only one trigger message representing this translocation is sent to one further transmitting device or two at least two further transmitting devices (R1.1).

3. Method according to any of the proceeding claims,
**characterized in that** the intermediate transmitting device (R2.2) sends at least two trigger messages to one or more further transmitting devices (R1.1) which trigger messages concern only one trigger message or at least two trigger messages, that the intermediate transmitting device (R2.2) received.

4. Method according to any of the proceeding claims,
**characterized in that** the intermediate transmitting device (R2.2) receives at least two trigger messages, wherein one of those trigger messages ("1. leave") indicates that a first cell (9) of a cellular mobile network is left by a mobile station of a participant, wherein the second of the two trigger message ("2. enter") indicates, that a mobile station of the participant entered a further cell (10) of this mobile network,
wherein the intermediate transmitting device (router R2.2) decides not to send a trigger message representing the two received trigger messages to a further transmitting device (R1.1), if the two cells entered or left according to the two received trigger messages are both in the coverage area of the same service or inside a predetermined stored area,
wherein else the intermediate transmitting device (R2.2) decides to send at least one trigger message to at least one further transmitting device (R1.1).

5. Method according to claim 4, **characterized in that** the intermediate transmitting device (R2.2) only decides not to send a trigger message representing the translocation of the participant indicated by the two received trigger messages, if the two trigger messages are received within a predetermined period of time.

6. Method according to one of the preceding claims,
**characterized in that** the first transmitting devices (routers R3.1, R3.2, R3.3) monitor with support of signals received from one or more base stations at least one cell of a mobile cellular network regarding conditions regarding the entering or leaving of at least one cell by a participant of the mobile cellular network, in which case at least one trigger message is sent to an intermediate transmitting device (R2.2)

7. Method according to one of the preceding claims,
**characterized in that** a first transmitting device (R3.1,R3.2,R3.3) stores data representing for which cells and/or in case regarding changes of a location of a participant they have to send a trigger message.

8. Method according to one of the proceeding claims,
**characterized in that** a trigger message sent by a first transmitting device is transmitted to a server offering services to a participant of a service, wherein after this the service sends service data regarding the service to a participant.

9. Method according to one of the proceeding claims,
**characterized in that** after receiving a trigger message concerning the entering or leaving of a cell by the participant the intermediate transmitting device (R2.2) waits for a predetermined period of time, before it sends a trigger message to a further transmitting device (R1.1).

10. Method according to one of the proceeding claims,
**characterized in that** the first transmitting devices are monitoring translocations of participants.

11. Method according to one of the proceeding claims,
**characterized in that** the intermediate transmitting device (R2.2) stores information indicating for which services a trigger message is to be send to which provider of a service.

12. Method according to one of the proceeding claims,
**characterized in that** a trigger message represents the identity of are participant, especially the identity of a participant's subscriber identity module and/or mobile station.

13. Method according to one of the proceeding claims,
**characterized in that** a trigger message comprises data identifying a service.

14. Method according to one of the proceeding claims,
**characterized in that** a trigger message comprises data identifying the provider of a service, especially identifying a server of a provider offering a service.

15. Method according to one of the proceeding claims,
**characterized in that** the mobile network is or comprises a cellular mobile telecommunication network.

16. Method according to one of the proceeding claims,
**characterized in that** the mobile telecommunication network is or comprises a WLAN-Network.

17. Method according to one of the proceeding claims,
**characterized in that** the further transmitting device (R1.1) sends a trigger message representing trigger messages received by more than one first transmitting device (R3.1,R3.2) to one provider of a service.

18. Method according to one of the proceeding claims,
**characterized in that** the telecommunication network in claim 1 is a packet switching network and that the transmitting devices are packet switching devices.

19. Method according to one of the proceeding claims,
**characterized in that** a trigger message comprises data representing the position of at least one cell entered or left by a participant.

20. Method according to one of the proceeding claims,
**characterized in that** a trigger message sent by an intermediate transmitting device (R2.2) comprises data regarding the coverage area offer service and/or a service.

21. Method according to one of the proceeding claims,
**characterized in that** data regarding the coverage area of a service and/or a predetermined service area (9,10,12) of a service are stored in an intermediate transmitting device (R2,1; R2.2) and/or in a first transmitting device (R3,1; R3.2; R3.3) and/or in a further transmitting device (R1.1).

22. Device (R2.2) for sending a trigger message indicating a translocation of a participant of a telecommunication network,
- comprising a receiving means for receiving, from at least two first transmitting devices or monitoring devices (R3.1, R3.2, R3.3), trigger messages (1.2) regarding the translocation (9->10) of a participant of the telecommunication network,
- comprising a memory for storing a coverage area of a service offered by a service provider to participants of the telecommunication network,
- comprising a comparing means for comparing data regarding a participant's position and/or translocation represented in one or more trigger messages with stored data concerning a coverage area of a service,
- comprising a decision means for deciding on whether to send a trigger message to none or one or to at least two further transmitting device (R1.1), based on the result of the comparison carried out by the comparing means,
- comprising a sending means for sending a trigger message to at least one further transmitting device (R1.1) in case of a decision to send this trigger message.

23. Method for activating a first transmitting device (R3.1,R3.2,R3.3) to send trigger messages representing a translocation of a participant in a mobile telecommunication network,
especially for activating a trigger method according to one of the proceeding claims,
wherein service position data representing the coverage area of a service and trigger criteria data (/"1.leave") are received by a further transmitting device (R1.1), wherein the further transmitting device (R1.1) determines based on stored data and/or received data, which intermediate transmitting devices (R2.1,R2.2) should receive messages concerning the trigger criteria,
wherein the further transmitting device (R1.1) sends data regarding the trigger criteria data ("1.leave",cells 9,10.12) to those intermediate transmitting devices (R2.1,R2.2),
wherein the intermediate transmitting devices (R2.1, R2.2) determine based on stored data and/or received data, which first transmitting devices (R3.1,R3.2, R3.3) should receive messages concerning the trigger criteria,
wherein those intermediate transmitting devices (R2.1,R2.2) send messages (1.leave, cell 9,10,12) to those first transmitting devices (R3.1,R3.2,R3.3), which first transmitting devices (R3.1,R3.2,R.3.3) start monitoring of messages concerning translocations of participants, regarding the received trigger criteria.

24. Method according to claim 23,
**characterized in that** a trigger criteria indicates, whether a message should only be send if according to a trigger message a participant leaves one cell of a predetermined number of cells and/or the participant enters a cell of a predetermined number of cells.
